# EUROPEAN PATENT APPLICATION

(11) **EP 4 219 629 A1**
(43) Date of publication of application: **02.08.2023**
(21) Application number: 21872063.9
(22) Date of filing: 24.08.2021
(51) Int. Cl.: C08L 71/02, C08K 5/5415, C08K 5/544, C09J 171/02, C09K 3/10

(54) **MOISTURE CURABLE RESIN COMPOSITION AND CURED PRODUCT**

(30) Priority: 25.09.2020 JP 2020161322
(71) Applicant: ThreeBond Co., Ltd., Tokyo 192-0398 (JP)
(72) Inventor: HASHIMOTO, Takahiro, Hachioji-shi, Tokyo 192-0398 (JP); TANAKA, Masayuki, Hachioji-shi, Tokyo 192-0398 (JP)
(74) Representative: Petty, Catrin Helen
(86) International application number: PCT/JP2021/030929
(87) International publication number: WO 2022/064931

(57) **Abstract**

[Problem] The present invention provides a moisture curable resin composition having excellent adhesiveness to aluminum while having excellent rapid curability and thick film curability by moisture without using an organic tin catalyst.

[Solution] A moisture curable resin composition comprising the following (A) to (C), wherein a (B) component is comprised in a predetermined amount per 100 parts by mass of the (A) component:
(A) component: a polyoxyalkylene having a hydrolyzable silyl group at both terminals
(B) component: a zinc-based catalyst
(C) component: a compound having one hydrolyzable silyl group and at least one amino group in one molecule.

## Description

### TECHNICAL FIELD

The present invention relates to a moisture curable resin composition having excellent curability without using an organic tin catalyst.

### BACKGROUND ART

Conventionally, a moisture curable resin composition that can be cured at room temperature is known, and an organic tin catalyst is used in a general-purpose manner. However, some organic tin catalysts are highly toxic, and in recent years, the harmfulness to the human body thereof has become problematic, and there has been a movement to regulate the use thereof in each country. Because of this, there is a strong demand for a catalyst that can be used as a substitute for an organic tin catalyst. For example, Patent Literature 1 discloses a moisture curable resin composition using a titanium catalyst, and Patent Literature 2 proposes a moisture curable resin composition using a boron trifluoride or its complex.

### Citation List

### Patent Literature

[Patent Literature 1] Japanese Patent Laid-Open No. 2013-147575
[Patent Literature 2] Japanese Patent Laid-Open No. 2005-054174

### SUMMARY OF INVENTION

### Technical Problem

However, the curable composition disclosed in Patent Literature 1 is inferior in the thick film curability by moisture and the adhesiveness to an aluminum member. In addition, in the curable resin composition disclosed in Patent Literature 2, the boron trifluoride or its complex contained as an essential component contains a large amount of a compound corresponding to a poisonous substance or a deleterious substance, and the curable resin composition is not suitable for a use such as an adhesive that can also be used by a general consumer.

An object of the present invention is to provide a moisture curable resin composition having excellent adhesiveness to aluminum while having excellent rapid curability and thick film curability by moisture without using an organic tin catalyst.

### Means for Solving Problem

Next, a summary of the present invention will be described. The embodiments of the present invention overcome the above conventional problems.

[1] A moisture curable resin composition comprising the following (A) to (C), wherein a (B) component is comprised in an amount of 0.5 to 25 parts by mass per 100 parts by mass of the (A) component:
   (A) component: a polyoxyalkylene having a hydrolyzable silyl group at both terminals
   (B) component: a zinc-based catalyst
   (C) component: a compound having one hydrolyzable silyl group and at least one amino group in one molecule.
[2] The moisture curable resin composition according to [1], wherein the hydrolyzable silyl group of the (A) component is a trimethoxysilyl group or a triethoxysilyl group.
[3] The moisture curable resin composition according to [1] or [2], wherein the (C) component is a compound having one hydrolyzable silyl group and at least two amino groups in one molecule.
[4] The moisture curable resin composition according to any one of [1] to [3], wherein the moisture curable resin composition further comprises a filler as a (D) component.
[5] The moisture curable resin composition according to any one of [1] to [4], wherein the moisture curable resin composition further comprises at least one of a compound having a phenyl group, a vinyl group, and an alkyl group, and one hydrolyzable silyl group, and a tetraalkoxysilane compound, as an (E) component.
[6] The moisture curable resin composition according to any one of [1] to [5], wherein the moisture curable resin composition further comprises a plasticizer as an (F) component.
[7] The moisture curable resin composition according to any one of [1] to [6], wherein the zinc-based catalyst of the (B) component is a complex compound having zinc as a central metal.
[8] The moisture curable resin composition according to any one of [1] to [7], wherein the moisture curable resin composition is used as a sealing agent or an adhesive.
[9] The moisture curable resin composition according to any one of [1] to [7], wherein the moisture curable resin composition is used as a sealing agent or an adhesive for an aluminum material.
[10] A cured product of the moisture curable resin composition according to any one of [1] to [7].

### Advantageous Effect of the Invention

The moisture curable resin composition according to the present invention has excellent adhesiveness to aluminum while having excellent rapid curability and thick film curability by moisture without using an organic tin catalyst.

### DESCRIPTION OF EMBODIMENTS

Hereinafter, the present invention will be described in detail. As used herein, "X to Y" is used in a sense that includes the numerical values (X and Y) written before and after the word "to" as the lower limit value and the upper limit value, respectively, and means "X or more and Y or less. "

### <(A) Component>

The (A) component of the present invention is a polyoxyalkylene (polyoxyalkylene glycol) having a hydrolyzable silyl group at both terminals, and is a polyoxyalkylene (polyoxyalkylene glycol) whose crosslinking reaction is started by moisture. By selecting the (A) component of the present invention from among other organic polymers and combining the same with the other components of the present invention ((B) component and (C) component), the moisture curable resin composition according to the present invention has the effect of excellent thick film curability by moisture and adhesiveness to aluminum and excellent elongation rate, tensile strength, and hardness of a cured product. The cured product is a cured product of the moisture curable resin composition of the present invention, and can be obtained by curing the moisture curable resin composition of the present invention. In addition, the thick film curability by moisture is an evaluation of the film thickness of a resin composition that can be cured by moisture, and can be evaluated by the "deep curability measurement" of Examples described later.

The (A) component is a compound having a polyoxyalkylene skeleton and having a hydrolyzable silyl group at both terminals thereof. Examples of the polyoxyalkylene of the (A) component include polyethylene glycol, polypropylene glycol, polytrimethylene glycol, and polytetramethylene glycol. Among these, polyethylene glycol and polypropylene glycol are preferable, and polypropylene glycol is more preferable.

The hydrolyzable silyl group in the (A) component is a silyl group in which 1 to 3 hydrolyzable groups are bonded to a silicon atom, and is represented by, for example, -Si(X)₃ wherein X is a hydrolyzable group. Preferable examples of the hydrolyzable group (X) include a halogen atom such as fluorine, chlorine, or bromine; an alkoxy group (-O-R; R is an alkyl group having 1 to 10 carbon atoms) such as a methoxy group, an ethoxy group, a propyloxy group, an isopropyloxy group, or a butoxy group; an acyloxy group (-OC(=O)R; R is an alkyl group having 1 to 10 carbon atoms); an alkylcarbonyl group (ketoximate group) (-C(=O)R; R is an alkyl group having 1 to 10 carbon atoms) ; an amino group (-NR¹R²; R¹ and R² are each independently a hydrogen atom or an alkyl group having 1 to 10 carbon atoms); an amide group (-C(=O)-NR¹R²; R¹ and R² are each independently a hydrogen atom or an alkyl group having 1 to 10 carbon atoms); an acid amide group (-C(=O)-NH(-C(=O)R¹) or -C(=O)-N(-C(=O)R¹)(-C(=O)R²); R¹ and R² are each independently an alkyl group having 1 to 10 carbon atoms); an aminooxy group (-O-NR¹R²; R¹ and R² are each independently a hydrogen atom or an alkyl group having 1 to 10 carbon atoms); a mercapto group (-SH); and an alkenyloxy group (-O-R; R is an alkenyl group having 1 to 10 carbon atoms) . When R, R¹, and R² are each an alkyl group, these are each preferably an alkyl group having 1 to 6 carbon atoms, and more preferably an alkyl group having 1 to 4 carbon atoms. Among these hydrolyzable groups, an alkoxy group is particularly preferable from the viewpoint of excellent thick film curability by moisture and adhesiveness to aluminum.

Examples of an alkoxysilyl group in which an alkoxy group is bonded to a silicon atom include a trialkoxysilyl group such as a trimethoxysilyl group, a triethoxysilyl group, a triisopropoxysilyl group, or a triphenoxysilyl group; a dialkoxysilyl group such as a methyldimethoxysilyl group or a methyldiethoxysilyl group; and a monoalkoxysilyl group such as a dimethylmethoxysilyl group or a dimethylethoxysilyl group. Among these, a dialkoxysilyl group and a trialkoxysilyl group are preferable, and the moisture curable resin composition according to the present invention has the effect of excellent thick film curability by moisture and adhesiveness to aluminum. More preferably, among these, a trimethoxysilyl group or a triethoxysily group is more preferable.

The number average molecular weight of the polyoxyalkylene contained in the (A) component is not particularly limited, and is preferably 500 to 500,000, more preferably 1000 to 100,000, and further preferably 2000 to 50,000. When the number average molecular weight of the polyoxyalkylene is in the above range, the effects of the present invention are further exerted.

The (A) component is preferably liquid at 23°C from the viewpoint of handling. The viscosity (23°C) of the (A) component is not particularly limited, and is preferably 0.5 to 500 Pa·s, more preferably 1 to 200 Pa·s, further preferably 3 to 150 Pa·s, particularly preferably 5 to 100 Pa·s, and most preferably in the range of 10 to 80 Pa·s. Within the above range, the moisture curable resin composition according to the present invention has the effect of far superior rapid curability and thick film curability by moisture and adhesiveness to aluminum. Unless otherwise specified, viscosity measurement was carried out using a cone-plate type viscometer, and viscosity at 25°C was measured according to JIS K6833.

As the (A) component, one obtained by a production method disclosed in known literature or the like can be used, or a commercially available product can be used.

The commercially available product of the (A) component is not particularly limited, and examples thereof include SILYL series SAT010, SAX115, SAT030, SAT030, SAT200, SAT350, SAT400, SAX220, SAX510, SAX520, SAX530, SAX575, SAX580, SAX710, SAX720, SAX725, SAX770, S203, S303, S203H, S303H, S943S, S911S, MA440, MA447, MA451, MA903, MA903M, MA904, S943, MAX923, and MAX951 (manufactured by Kaneka Corporation).

### <(B) Component>

The (B) component of the present invention is not particularly limited as long as it is a zinc-based catalyst. By selecting the (B) component of the present invention from among silanol catalysts and combining the same with the other components of the present invention ((A) component and (C) component), a remarkable effect of being excellent in adhesiveness to aluminum while being excellent in rapid curability and thick film curability by moisture without using an organic tin catalyst can be brought about. Examples of the (B) component include a complex compound having zinc (divalent) as a central metal.

When the (B) component contains a ligand, examples of the ligand include an amine compound, a carboxylate compound, a β-ketoester compound, and a β-diketone compound, and among these, an amine compound and a carboxylate compound are preferable.

Examples of the amine compound include a primary amine, a secondary amine and a tertiary amine.

The (B) component is preferably a complex compound having zinc as a central metal and having an amine compound as a ligand. When the (B) component has such a structure, the desired effects of the present invention are further exerted.

Examples of the primary amine include N-propylamine, N-isopropylamine, N-butylamine, N-benzylamine, N-hexylamine, N-cyclohexylamine, N-n-octylamine, N-(2-ethylhexyl)amine, N-(2-phenylethyl)amine, N-(3-methoxypropyl)amine, N-decylamine, N-dodecylamine, and ethylenediamine. In addition, examples of the secondary amine include N,N-dipropylamine, N,N-diisopropylamine, N,N-dibutylamine, N,N-dihexylamine, N,N-dicyclohexylamine, N,N-bis(2-methoxyethyl)amine, N,N-dioctylamine, N,N-bis(2-ethylhexyl)amine, N,N-diisononylamine, N,N-bis(tridecyl)amine, morpholine, 2,2,6,6-tetramethylpiperidine, N,N'-dimethylethylenediamine, N,N'-diethylethylenediamine, and N,N'-diisopropylethylenediamine. In addition, examples of the tertiary amine include imidazole, 1-methylimidazole, 1-butylimidazole, 1,2-dimethylimidazole, tetramethylguanidine, DBU, and DBN. In addition, examples of the carboxylate compound include acetic acid, formic acid, oxalic acid, malonic acid, succinic acid, glutaric acid, adipic acid, pimelic acid, suberic acid, azelaic acid, sebacic acid, and neodecanoic acid. In addition, examples of the β-ketoester compound include methyl acetoacetate, ethyl acetoacetate, n-propyl acetoacetate, isopropyl acetoacetate, n-butyl acetoacetate, sec-butyl acetoacetate, and t-butyl acetoacetate. In addition, examples of the β-diketone compound include acetylacetone, hexane-2,4-dione, heptane-2,4-dione, heptane-3,5-dione, octane-2,4-dione, nonane-2,4-dione, and 5-methyl-hexane-2,4-dione. These may be used singly or in combinations of two or more.

Specific examples of the (B) component are not particularly limited, and include zinc (1-butylimidazole)₂(acetate)₂, zinc (1-methylimidazole)₂(acetate)₂, zinc (imidazole)₂(acetate)₂, Zinc (1,2-dimethylimidazole)₂(acetate)₂, zinc (tetramethylguanidine)₂(acetate)₂, zinc (DBN)₂(acetate)₂, zinc (DBU)₂(acetate)₂, zinc (1-butylimidazole)₂(acetate)₂, zinc (1-methylimidazole)₂(formate)₂, zinc (imidazole)₂(formate)₂, zinc (1,2-dimethylimidazole)₂(formate)₂, zinc (tetramethylguanidine)₂(formate)₂, zinc (DBN)₂(formate)₂, zinc (DBU)₂(formate)₂, zinc (1-butylimidazole)₂(neodecanoic acid)₂, Zinc (1-methylimidazole)₂(neodecanoic acid)₂, zinc (imidazole)₂(neodecanoic acid)₂, zinc (1,2-dimethylimidazole)₂(neodecanoic acid)₂, zinc (tetramethylguanidine)₂(neodecanoic acid)₂, zinc (DBN)₂(neodecanoic acid)₂, and zinc (DBU)₂(neodecanoic acid)₂.

The commercially available product of the (B) component is not particularly limited, and examples thereof include K-KAT 670 and K-KAT XK-648 (manufactured by KING INDUSTRIES, Inc.), and Borchi Kat 0244, Borchi Kat 15, and Borchi Kat 22 (manufactured by OMG Borchers GmbH).

The amount of the (B) component blended is in the range of 0.5 to 25 parts by mass, more preferably 0.6 to 20 parts by mass, further preferably 0.7 to 10 parts by mass, particularly preferably 0.8 to 8 parts by mass, and most preferably 0.9 to 5 parts by mass, per 100 parts by mass of the (A) component. In addition, in one embodiment, the amount of the (B) component blended can be in the range of 1.5 to 10 parts by mass per 100 parts by mass of the (A) component. Within the above range, the adhesiveness to aluminum and the elongation rate, the tensile strength, and the hardness of the cured product are excellent while the rapid curability and the thick film curability by moisture are excellent. In addition, the amount of the (B) component blended is not particularly limited, and is preferably in the range of 0.5 to 50 parts by mass, more preferably in the range of 1 to 30 parts by mass, further preferably in the range of 5 to 25 parts by mass, particularly preferably in the range of 8 to 20 parts by mass, and most preferably in the range of 6 to 18 parts by mass, per 10 parts by mass of the (C) component described later. In addition, in one embodiment, the amount of the (B) component blended can be in the range of 1 to 10 parts by mass or in the range of 3 to 9 parts by mass per 10 parts by mass of the (C) component. Within the above range, the rapid curability and the thick film curability by moisture are far superior.

### <(C) Component>

The (C) component of the present invention is not particularly limited as long as it is a compound having one hydrolyzable silyl group and at least one amino group in one molecule. By combining the (C) component with the other components of the present invention ((A) component and (B) component), the moisture curable resin composition according to the present invention has the effect of excellent thick film curability by moisture. Examples of the amino group include a primary amino group (-NH₂), a secondary amino group (-NHR: R is an alkyl group having 1 to 10 carbon atoms, an alkenyl group having 2 to 10 carbon atoms, an aminoalkyl group having 1 to 10 carbon atoms, or an aryl group having 6 to 20 carbon atoms), and a tertiary amino group (-NRR': R and R' are each independently an alkyl group having 1 to 10 carbon atoms, an alkenyl group having 2 to 10 carbon atoms, an aminoalkyl group having 1 to 10 carbon atoms, or an aryl group having 6 to 20 carbon atoms). Here, the amino group of the aminoalkyl group having 1 to 10 carbon atoms may have a group (substituent) other than the hydrogen atom, and the substituent is an alkyl group having 1 to 10 carbon atoms, an alkenyl group having 2 to 10 carbon atoms, an aryl group having 6 to 20 carbon atoms, or an arylalkenyl group having 8 to 20 carbon atoms. Among these, one having a plurality of amino groups in one molecule is preferable, and a compound having both a primary amino group and a secondary amino group in one molecule is particularly preferable. As the hydrolyzable group, the same hydrolyzable group as in the (A) component can be applied. The hydrolyzable group in the (C) component is preferably a halogen atom; an alkoxy group such as a methoxy group, an ethoxy group, a propyloxy group, an isopropyloxy group, or a butoxy group; an acyloxy group; or a ketoximate group. An alkoxy group is more preferable from the viewpoint of excellent adhesiveness to aluminum. The (C) component of the present invention is preferably a compound having one hydrolyzable silyl group and at least two amino groups in one molecule.

Here, in one embodiment, the (C) component is represented by the formula (I) : NR¹R²R³. In the formula (I), R¹ is a group represented by -Si(R⁴)₃ or -R⁵-Si(R⁴)₃ wherein each R⁴ is independently a halogen atom, an alkyl group having 1 to 6 carbon atoms, or an alkoxy group having 1 to 6 carbon atoms and R⁵ is an alkylene group having 1 to 10 carbon atoms, and R² and R³ are each independently a hydrogen atom, an alkyl group having 1 to 10 carbon atoms, an alkenyl group having 2 to 10 carbon atoms, an aminoalkyl group having 1 to 10 carbon atoms, or an aryl group having 6 to 20 carbon atoms. Here, the amino group of the aminoalkyl group having 1 to 10 carbon atoms may have a group (substituent) other than the hydrogen atom, and the substituent is an alkyl group having 1 to 10 carbon atoms, an alkenyl group having 2 to 10 carbon atoms, an aryl group having 6 to 20 carbon atoms, or an arylalkenyl group having 8 to 20 carbon atoms.

The (C) component is not particularly limited, and examples thereof include 3-aminopropyltrimethoxysilane, 3-aminopropyltriethoxysilane, 3-triethoxysilyl-N-(1,3-dimethylbutylidene)propylamine, N-phenyl-3-aminopropyltrimethoxysilane, N-(vinylbenzyl)-2-aminoethyl-3-aminopropyltrimethoxysilane hydrochloride, N-2-(aminoethyl)-3-aminopropyltrimethoxysilane, and N-2-(aminoethyl)-3-aminopropylmethyldimethoxysilane, and among these, N-2-(aminoethyl)-3-aminopropyltrimethoxysilane and N-2-(aminoethyl)-3-aminopropylmethyldimethoxysilane are preferable from the viewpoint of excellent rapid curability and thick film curability by moisture. In addition, the commercially available product of the (C) component is not particularly limited, and examples thereof include KBM-903, KBE-903, KBE-9103P, KBM-573, KBM-575, KBM-603, and KBM-602 (manufactured by Shin-Etsu Chemical Co., Ltd.).

The amount of the (C) component blended is in the range of 0.1 to 25 parts by mass, more preferably 0.3 to 20 parts by mass, further preferably 0.4 to 15 parts by mass, particularly preferably 0.5 to 10 parts by mass, and most preferably 1 to 5 parts by mass, per 100 parts by mass of the (A) component. Within the above range, the thick film curability by moisture is far superior.

### <(D) Component>

The moisture curable resin composition of the present invention can further contain a filler as a (D) component as long as the object of the present invention is not impaired. The (D) component is not particularly limited, and examples thereof include talc, silica, clay, calcium carbonate, magnesium carbonate, calcium silicate, glass, alumina, zinc oxide, magnesium oxide, aluminum nitride, boron nitride, carbon, diamond, gold, silver, copper, and nickel. In addition, the (D) component may be surface-treated with fatty acid soap or the like. In addition, these may be used singly or as a mixture.

In order to impart a high modulus of a cured product to the curable resin composition, the (D) component is preferably talc, silica, clay, calcium carbonate, magnesium carbonate, calcium silicate, or glass, and particularly preferably calcium carbonate. In addition, calcium carbonate is preferably surface-treated with fatty acid soap or the like, and surface-treated calcium carbonate and non-surface-treated calcium carbonate are further preferably used in combination. Next, for the purpose of imparting thermal conductivity to the moisture curable resin composition, the (D) component is preferably a thermally conductive powder of alumina, zinc oxide, magnesium oxide, aluminum nitride, boron nitride, carbon, diamond, or the like; for the purpose of imparting flame retardancy to the moisture curable resin composition, the (D) component is preferably aluminum hydroxide; and for the purpose of imparting electric conductivity to the moisture curable resin composition, the (D) component is preferably an electrically conductive filler such as gold, silver, copper, or nickel.

The average particle diameter (50% average particle diameter) of the (D) component is preferably 0.001 to 90 µm, more preferably 0.005 to 50 µm, further preferably 0.01 to 20 µm, particularly preferably 0.01 to 10 µm, and most preferably 0.03 to 5 µm from the viewpoint of obtaining a moisture curable resin composition having excellent adhesiveness to aluminum. In the present invention, the average particle diameter is, for example, the particle diameter (volume average) corresponding to a cumulative percentage of 50% (also referred to as D50) in a particle size distribution obtained by a laser diffraction/scattering method.

In one embodiment, when surface-treated calcium carbonate and non-surface-treated calcium carbonate are used in combination as the (D) component, the average particle diameter of each calcium carbonate is different, and thereby the adhesiveness to aluminum can be further improved. For example, the average particle diameter of surface-treated calcium carbonate is preferably 0.001 to 10 µm, more preferably 0.005 to 5 µm, further preferably 0.01 to 1 µm, particularly preferably 0.01 to 0.5 µm, and most preferably 0.01 to 0.3 µm. For example, the average particle diameter of non-surface-treated calcium carbonate is preferably 0.01 to 90 µm, more preferably 0.05 to 50 µm, further preferably 0.1 to 20 µm, particularly preferably 0.5 to 10 µm, and most preferably 0.7 to 5 µm.

The amount of the (D) component blended is in the range of 2 to 400 parts by mass, more preferably 10 to 300 parts by mass, further preferably 30 to 200 parts by mass, particularly preferably 50 to 180 parts by mass, and most preferably 100 to 170 parts by mass, per 100 parts by mass of the (A) component. Within the above range, the adhesiveness to aluminum is far superior. When two or more (D) components are used in combination, the above amount blended is the total amount thereof.

In one embodiment, when surface-treated calcium carbonate and non-surface-treated calcium carbonate are used in combination as the (D) component, the mass ratio of surface-treated calcium carbonate to non-surface-treated calcium carbonate, (surface-treated calcium carbonate):(non-surface-treated calcium carbonate), is preferably 10:1 to 1:10, more preferably 5:1 to 1:5, and further preferably 3:1 to 1:3. By using surface-treated calcium carbonate and non-surface-treated calcium carbonate in combination at the above mass ratio as the (D) component, the adhesiveness to aluminum can be further improved.

### <(E) Component>

The moisture curable resin composition of the present invention can contain at least one of (e1) a compound having at least one group selected from the group consisting of a phenyl group, a vinyl group, and an alkyl group, and one hydrolyzable silyl group, and (e2) a tetraalkoxysilane compound as an (E) component as long as the object of the present invention is not impaired. The above (e1) is a compound having at least one group selected from the group consisting of a phenyl group, a vinyl group, and an alkyl group and having one hydrolyzable silyl group, in the molecule. By combining the (E) component with the other components of the present invention, the adhesiveness to aluminum is excellent. Among the above, a compound having at least one alkyl group and one hydrolyzable silyl group is preferable as the (E) component because the rapid curability by moisture is good.

Here, the alkyl group in (e1) is preferably an alkyl group having 1 to 10 carbon atoms, more preferably an alkyl group having 1 to 6 carbon atoms, and further preferably an alkyl group having 1 to 4 carbon atoms. The alkyl group may be linear, branched, or cyclic, and is preferably a linear alkyl group. As the hydrolyzable silyl group in (e1), the same hydrolyzable silyl group as in the (A) component can be applied. The alkoxy group in the (e2) tetraalkoxysilane compound is preferably an alkoxy group having 1 to 10 carbon atoms, more preferably an alkoxy group having 1 to 6 carbon atoms, and further preferably an alkoxy group having 1 to 4 carbon atoms. The alkyl group may be linear, branched, or cyclic, and is preferably a linear alkyl group.

Examples of a compound having at least one phenyl group and one hydrolyzable silyl group include phenyltrimethoxysilane, diphenyldimethoxysilane, and phenyltriethoxysilane. Examples of a compound having at least one vinyl group and one hydrolyzable silyl group include vinyltrimethoxysilane and vinyltriethoxysilane. Examples of a compound having at least one alkyl group and one hydrolyzable silyl group include dimethyldimethoxysilane, methyltrimethoxysilane, methyltriethoxysilane, dimethyldiethoxysilane, and hexyltrimethoxysilane. Examples of the tetraalkoxysilane compound include ethyl silicate, propyl silicate, and butyl silicate. These (E) components may be used singly or in combinations of two or more.

The amount of the (E) component added is preferably in the range of 0.05 to 30 parts by mass, more preferably 0.5 to 20 parts by mass, further preferably 2 to 15 parts by mass, particularly preferably 3 to 10 parts by mass, and most preferably in the range of 5 to 10 parts by mass, per 100 parts by mass of the (A) component. Within the above range, the moisture curable resin composition has excellent adhesiveness to aluminum. In addition, the amount of the (E) component added is preferably 5 to 100 parts by mass, more preferably 10 to 80 parts by mass, further preferably 10 to 50 parts by mass, particularly preferably 10 to 40 parts by mass, and most preferably 12 to 30 parts by mass, per 10 parts by mass of the (B) component. Within the above range, the rapid curability and the thick film curability by moisture are far superior.

### <(F) Component>

Further, the moisture curable resin composition of the present invention can further contain a plasticizer as an (F) component as long as the object of the present invention is not impaired. The (F) component is roughly classified into a phthalate-based plasticizer and a non-phthalate-based plasticizer, and a non-phthalate-based plasticizer is preferable because it has low carcinogenicity and can maintain the effects of the present invention. The non-phthalate-based plasticizer is not particularly limited, and examples thereof include a (meth)acrylic polymer-based plasticizer obtained by polymerizing a (meth)acrylic monomer; a polyether polyol-based plasticizer such as polyethylene glycol, polypropylene glycol, or polytetramethylene glycol; a polyester-based plasticizer obtained from a dibasic acid such as sebacic acid or adipic acid and a dihydric alcohol such as ethylene glycol, diethylene glycol, triethylene glycol, or propylene glycol; a process oil-based plasticizer; and an phenyl alkylsulfonate and tributyl acetylcitrate.

Examples of a commercially available product of the non-phthalate-based plasticizer include ADK CIZERs PN-7160, PN-160, and PN-9302, which are polyester-based plasticizers derived from adipic acid; Mesamoll (R) manufactured by Lanxess, which is a phenyl alkylsulfonate; and ADK CIZER PN-6810, which is tributyl acetylcitrate.

In addition, the amount of the (F) component added is preferably in the range of 5 to 300 parts by mass, more preferably 10 to 150 parts by mass, further preferably 12 to 75 parts by mass, particularly preferably 15 to 70 parts by mass, and most preferably in the range of 20 to 60 parts by mass, per 100 parts by mass of the (A) component of the present invention. Within the above range, the adhesiveness to aluminum is far superior while the rapid curability and the thick film curability by moisture are far superior.

The moisture curable resin composition of the present invention can contain an additive such as an antioxidant, a light stabilizer, a heavy metal deactivator, a tackifier, an antifoaming agent, a dye, a pigment, a rust preventive, a leveling agent, a dispersant, a rheology modifier, or a surfactant as long as the object of the present invention is not impaired.

An antioxidant may be added to the moisture curable resin composition of the present invention. Examples of the antioxidant include a quinone-based compound such as β-naphthoquinone, 2-methoxy-1,4-naphthoquinone, methylhydroquinone, hydroquinone, hydroquinone monomethyl ether, mono-tert-butylhydroquinone, 2,5-di-tert-butylhydroquinone, p-benzoquinone, 2,5-diphenyl-p-benzoquinone, or 2,5-di-tert-butyl-p-benzoquinone; a phenol such as, phenothiazine, 2,2-methylene-bis(4-methyl-6-tertbutylphenol), catechol, tert-butyl catechol, 2-butyl-4-hydroxyanisole, 2,6-di-tert-butyl-p-cresol, 2-tert-butyl-6-(3-tert-butyl-2-hydroxy-5-methylbenzyl)-4-methylphenyl acrylate, 2-[1-(2-hydroxy-3,5-di-tert-pentylphenyl)ethyl]-4,6-di-tert-pentylphenyl acrylate, 4,4'-butylidenebis(6-tert-butyl-3-methylphenol), 4,4'-thiobis(6-tert-butyl-3-methylphenol), 3,9-bis[2-[3-(3-tert-butyl-4-hydroxy-5-methylphenyl)propionyloxy]-1,1-dimethylethyl]-2,4,8,10-tetraoxaspiro[5,5]undecane, pentaerythritol tetrakis[3-(3,5-di-tert-butyl-4-hydroxyphenyl)propionate], thiodiethylenebis [3-(3,5-di-tert-butyl-4-hydroxyphenyl)propionate], octadecyl-3-(3,5-di-tert-butyl-4-hydroxyphenyl)propionate, N,N'-hexane-1,6-diylbis[3-(3,5-di-tert-butyl-4-hydroxyphenyl)propionamide], benzenepropanoic acid, 3,5-bis(1,1-dimethylethyl)-4-hydroxy-C7-C9 side chain alkyl ester, 2,4-dimethyl-6-(1-methylpentadecyl)phenol, diethyl [[3,5-bis(1,1-dimethylethyl)-4-hydroxyphenyl]methyl]phosphonate, 3,3',3",5,5',5"-hexa-tert-butyl-a,a',a"-(mesitylene-2,4,6-tolyl)tri-p-cresol, calcium diethylbis[[3,5-bis(1,1-dimethylethyl)-4-hydroxyphenyl]methyl]phosphonate, 4,6-bis(octylthiomethyl)-o-cresol, ethylenebis(oxyethylene)bis[3 -(5-tert-butyl-4-hydroxy-m-tolyl)propionate], hexamethylenebis[3-(3,5-di-tert-butyl-4-hydroxyphenyl)propionate, 1,3,5-tris(3,5-di-tert-butyl-4-hydroxybenzyl)-1, 3,5-triazine-2,4,6(1H,3H,5H) -trione, 1,3,5-tris[(4-tert-butyl-3-hydroxy-2,6-xylyl)methyl]-1,3,5-triazine-2,4,6(1H,3H,5H)-trione, a reaction product of N-phenylbenzenamine and 2,4,6-trimethylpentene, 2,6-di-tert-butyl-4-(4,6-bis(octylthio)-1,3,5-triazin-2-ylamino)phenol, picric acid or citric acid; a phosphorus compound such as tris(2,4-di-tert-butylphenyl) phosphite, tris[2-[[2,4,8,10-tetra-tert-butyldibenzo[d,f] [1,3,2]dioxaphosphepin-6-yl]oxy]ethyl]amine, bis(2,4-di-tert-butylphenyl)pentaerythritol diphosphite, bis[2,4-bis(1,1-dimethylethyl)-6-methylphenyl] ethyl ester phosphorous acid, tetrakis(2,4-di-tert-butylphenyl)[1,1-bisphenyl]-4,4'-diylbisphosphonite, or 6-[3-(3-tert-butyl-4-hydroxy-5-methylphenyl)propoxy]-2,4,8,10-tetra-tert-butyldibenzo[d,f][1,3,2]dioxaphosphephin; dilauryl 3,3'-thiodipropionate, dimyristyl 3,3'-thiodipropionate, distearyl 3,3'-thiodipropionate, pentaerythrityl tetrakis(3-laurylthiopropionate), a lactone-based compound; and a vitamin E-based compound. Among these, a phenol-based compound is suitable.

The moisture curable resin composition according to the present invention has excellent adhesiveness to aluminum while having excellent rapid curability and thick film curability by moisture without using an organic tin catalyst. Therefore, the moisture curable resin composition of the present invention contains substantially no or no organic tin catalyst or organic tin compound. "Contain substantially no" means that the amount thereof is preferably 0.001% by mass or less, and more preferably 0.0001% by mass or less, based on the total mass of the moisture curable resin composition.

### <Curing method and cured product>

The moisture curable resin composition of the present invention can be cured in a normal temperature (23°C) environment by moisture or two-liquid mixing. As specific curing conditions of the moisture curable resin composition of the present invention, for example, the temperature is preferably in the range of 5 to 70°C, and the humidity is preferably in the range of 5 to 100% RH. In addition, a cured product obtained by curing the curable resin composition of the present invention (that is, a cured product of the moisture curable resin composition of the present invention) is also an aspect of the present invention. Curing by two-liquid mixing means that curing is possible by mixing two liquids at the time of use.

### <Use>

The moisture curable resin composition of the present invention has excellent adhesiveness to aluminum while having excellent rapid curability and thick film curability by moisture, and thus is preferably used in various uses such as an adhesive, a sealing agent, a sealant agent, a potting agent, a coating agent, a thermally conductive resin, a flame retardant resin, and an electrically conductive paste, and is particularly used in a use such as an automobile part, an electrical or electronic part, or a building material.

Examples of the automobile part include an oil pan, a transmission, an oil pressure switch, an air flow meter, a cam position sensor, a water temperature sensor, a crank position sensor, an intake air temperature sensor, a vehicle speed sensor, an in-vehicle electronic board, a nickel battery, a Li battery, and a fuel cell, and the moisture curable resin composition of the present invention can be suitably used in the adhesive, the sealing agent, and the potting agent.

In addition, when thermal conductivity is imparted to the moisture curable resin composition of the present invention, the moisture curable resin composition can be used in various uses such as heat dissipation from an electronic board; heat dissipation from an electronic device such as a cellphone or a personal computer; heat dissipation from a lighting device such as an LED; heat dissipation from an optical pickup module; heat dissipation of a camera module; heat dissipation from a sensing device; heat dissipation from a power semiconductor; heat dissipation from an inverter for an HEV, an FCV, or an EV; heat dissipation from a converter for an HEV, an FCV, or an EV; and heat dissipation from a battery pack or an ECU part for an HEV, an FCV, or an EV.

The moisture curable resin composition of the present invention has excellent adhesiveness to aluminum, and thus is suitably used as an adhesive or a sealing agent for a use in which aluminum is used. Examples of the use in which aluminum is used include a back sheet including an aluminum layer used for a solar cell, a heat dissipation fin, and a case for a battery or the like.

### <Sealing method>

The sealing method using the moisture curable resin composition of the present invention is not particularly limited, and representative examples thereof include FIPG (formed-in-place gasketing), CIPG (cured-in-place gasketing), MIPG (mold-in-place gasketing), and liquid injection molding. Among these, the sealing method can be suitably used as FIPG.

FIPG is a method involving applying the moisture curable resin composition of the present invention to a flange of a part to be sealed using an automatic application apparatus or the like, and in the state of the flange being bonded to another flange, curing the moisture curable resin composition to adhere and seal the flanges. More specifically, the method is a sealing method for sealing at least a portion between at least two flanges of a part to be sealed having the at least two flanges, the sealing method including: a step of applying the above moisture curable resin composition to a surface of at least one flange of the at least two flanges; a step of bonding the one flange to which the moisture curable resin composition is applied and another flange together via the moisture curable resin composition; and a step of curing the curable resin composition to seal at least a portion between the at least two flanges.

CIPG is a method involving bead-applying the moisture curable resin composition of the present invention to a flange of a part to be sealed using a screen printing application apparatus, an automatic application apparatus, or the like, curing the moisture curable resin composition to form a gasket, and bonding the flange and another flange together to compress and seal the flanges. More specifically, the method is a sealing method for sealing at least a portion between at least two flanges of a part to be sealed having the at least two flanges, the sealing method including: a step of applying the above moisture curable resin composition to at least one flange of the at least two flanges; a step of curing the applied moisture curable resin composition to form a gasket made of a cured product of the moisture curable resin composition; and a step of disposing another flange on the gasket and crimping the one flange to which the moisture curable resin composition is applied and the another flange via the gasket to seal at least a portion between the at least two flanges.

MIPG is a method involving pressing a mold against a flange of a part to be sealed in advance, injecting a moisture curable resin composition into a cavity formed between the mold and the flange, and curing the moisture curable resin composition to form a gasket, and bonding the flange and another flange together to compress and seal the flanges. In addition, in order to make it easy to remove the gasket from the mold after gasket formation, it is preferable to apply a release agent such as a fluorine-based release agent or a silicone-based release agent to the mold in advance. More specifically, the method is a sealing method for sealing at least a portion between at least two flanges of a part to be sealed having the at least two flanges, the sealing method including: a step of disposing a mold for gasket formation on at least one flange of the at least two flanges; a step of injecting the above moisture curable resin composition into at least a portion of a gap between the mold for gasket formation and the one flange on which the mold is disposed; a step of curing the moisture curable resin composition to form a gasket made of a cured product of the moisture curable resin composition; a step of removing the mold from the one flange; and a step of disposing another flange on the gasket and crimping the one flange and the another flange via the gasket to seal at least a portion between the at least two flanges.

### EXAMPLES

The present invention will be described in more detail with reference to Examples below, but the present invention is not limited to these Examples.

The test methods used in the Examples and the Comparative Examples are as follows.

### <Preparation of moisture curable resin composition>

### • Example 1

100 parts by mass of a polyoxyalkylene having a trimethoxysilyl group at both terminals having a viscosity (23°C) of 50 Pa·s (SILYL SAX575 manufactured by Kaneka Corporation) as an (a1) component of the (A) component of the present invention, 1.8 parts by mass of a complex compound having zinc as a central metal (K-KAT 670 manufactured by KING INDUSTRIES, Inc.) as (b1) of the (B) component, 2.5 parts by mass of N-2-(aminoethyl)-3-aminopropyltrimethoxysilane (KBM-603 manufactured by Shin-Etsu Chemical Co., Ltd.) as (c1) of the (C) component, 50 parts by mass of untreated calcium carbonate having an average particle diameter of 1.3 µm (Softon1800 manufactured by Bihoku Funka Kogyo Co., Ltd.) as (d1) of the (D) component, 110 parts by mass of calcium carbonate treated with fatty acid soap having an average particle diameter of 0.05 µm (Maruo Calcium Co., Ltd., Calfine 500) as (d2), 7 parts by mass of methyltrimethoxysilane (KBM-13 manufactured by Shin-Etsu Chemical Co., Ltd.) as the (E) component, and 40 parts by mass of a phenyl alkylsulfonate (Mesamoll manufactured by Lanxess) as the (F) component were added, and mixed at normal temperature (25°C) using a planetary mixer for 60 minutes to obtain Example 1, which was a moisture curable resin composition.

### • Example 2

Example 2 was prepared and obtained in the same manner as in Example 1, except that in Example 1, the (a1) component was changed to a polyoxyalkylene having a methyldimethoxysilyl group at both terminals having a viscosity (23°C) of 25 Pa·s (SILYL SAT200 manufactured by Kaneka Corporation) as (a2).

### • Example 3

Example 3 was prepared and obtained in the same manner as in Example 1, except that in Example 1, the amount of the (b1) component was changed from 1.8 parts by mass to 1.0 parts by mass.

### • Example 4

Example 4 was prepared and obtained in the same manner as in Example 1, except that in Example 1, the amount of the (b1) component was changed from 1.8 parts by mass to 3.6 parts by mass.

### • Example 5

Example 5 was prepared and obtained in the same manner as in Example 1, except that in Example 1, the (c1) component was changed to 3-aminopropyltrimethoxysilane (manufactured by Shin-Etsu Chemical Co., Ltd.) as (c'1).

### • Comparative Example 1

Comparative Example 1 was prepared and obtained in the same manner as in Example 1, except that in Example 1, the (a1) component was changed to an acrylic polymer having a dimethoxysilyl group at both terminals having a viscosity (23°C) of 230 Pa·s (XMAP SA100S manufactured by Kaneka Corporation) as (a'1).

### • Comparative Example 2

Comparative Example 2 was prepared and obtained in the same manner as in Example 1, except that in Example 1, the (a1) component was changed to polyisobutylene having a dimethoxysilyl group at both terminals having a viscosity (23°C) of 700 Pa·s (EPION EP100S manufactured by Kaneka Corporation) as (a'2) .

### • Comparative Example 3

Comparative Example 3 was prepared and obtained in the same manner as in Example 1, except that in Example 1, the amount of the (b1) component was changed from 1.8 parts by mass to 0.1 parts by mass.

### • Comparative Example 4

Comparative Example 4 was prepared and obtained in the same manner as in Example 1, except that in Example 1, the (b1) component was changed to a titanium chelate-based catalyst (TC-750 manufactured by Matsumoto Fine Chemical Co., Ltd.) as (b'1).

### • Comparative Example 5

Comparative Example 5 was prepared and obtained in the same manner as in Example 1, except that in Example 1, (c1) was omitted.

### • Reference Example 1

Reference Example 1 was prepared and obtained in the same manner as in Example 1, except that in Example 1, the (b1) component was changed to dibutyltin dimethoxide as (b'2) .

The test methods used in the Examples and the Comparative Examples in Table 1 are as follows.

### <(1) Tack free time measurement>

The moisture curable resin composition shown in Table 1 is applied, and then left in an atmosphere of 23°C × 50% RH, the surface of the moisture curable resin composition is touched with a wooden rod, and the time it takes for stringiness of the moisture curable resin composition to disappear is defined as the "tack free time (minutes)." The tack free time is preferably 300 minutes or less and further preferably 200 minutes or less from the viewpoint of rapid curability by moisture curing. Results are shown in Table 1.

### <(2) Measurement of tensile shear adhesion strength to aluminum>

### • Preparation of test specimen

The moisture curable resin composition of any of the Examples and the Comparative Examples in Table 1 is applied to a test piece made of aluminum (A1050P) having a width of 25 mm, a length of 100 mm, and a thickness of 1 mm. After that, another test piece made of aluminum (A1050P) was attached thereto and fixed such that the sizes of the overlap surface were 25 mm × 10 mm and clearance was 1 mm. Then, the test piece was cured for 7 days in an environment of 23°C and 50% RH to prepare a test specimen.

### • Measurement of tensile shear adhesion strength

Using the test specimen, the shear adhesion strength (in units of MPa) was measured at 25°C using a universal tensile tester (tensile speed of 50 mm/min.) according to JIS K 6850:1999. The shear adhesion strength is the value at the maximum strength. Results are shown in Table 1. "Not measurable" in the table means that the test was unable to be carried out because there was no curing with a thickness of 1 mm even after the lapse of the predetermined curing time.

In the present invention, the shear adhesion strength to aluminum is preferably 1.80 MPa or more.

### (3) Deep curability measurement

A polyethylene container (inner diameter of 20 mm, height of 40 mm, wall surface thickness of 5 mm) was filled with 12.6 mL of the moisture curable resin composition, and then the surface of the moisture curable resin composition was flattened using a spatula. Next, the moisture curable resin composition was cured in an environment of 23°C and 500 RH for 24 hours. After that, only the cured portion was taken out from the surface of the moisture curable resin composition, and the thickness (mm) of the cured portion was measured using a film thickness meter. The deep curability is preferably 2.2 mm or more, and more preferably 2.5 mm or more.

**[Table 1]**

| | (1) Tack free time | (2) Tensile shear adhesion strength to aluminum | (3) Deep curability |
|---|---|---|---|
| | minutes | MPa | mm |
| Example 1 | 55 | 3.00 | 2.6 |
| Example 2 | 110 | 1.90 | 2.9 |
| Example 3 | 100 | 2.40 | 3.0 |
| Example 4 | 25 | 2.89 | 3.2 |
| Example 5 | 80 | 3.31 | 2.2 |
| Comparative Example 1 | 100 | 1.16 | 1.6 |
| Comparative Example 2 | 95 | Not measurable | 0.4 |
| Comparative Example 3 | 360 | 0.66 | 2.4 |
| Comparative Example 4 | 540 | 0.85 | 2.2 |
| Comparative Example 5 | 50 | 1.68 | 2.8 |
| Reference Example 1 | 40 | 2.60 | 2.6 |

From the results of Examples 1 to 5 in Table 1, it was confirmed that the moisture curable resin composition of the present invention has excellent adhesiveness to aluminum while having excellent rapid curability and thick film curability by moisture.

Comparative Example 1 in Table 1 is a composition using an acrylic polymer having a dimethoxysilyl group at both terminals as (a'1), which is not the (A) component of the present invention, and it was confirmed that the thick film curability and the adhesiveness to aluminum were inferior. In addition, Comparative Example 2 is a composition using polyisobutylene having a dimethoxysilyl group at both terminals as (a'2), which is not the (A) component of the present invention, and it was confirmed that the thick film curability was remarkably inferior. In addition, Comparative Example 3 is a composition in which the amount of the (B) component of the present invention added was below the specified range, and it was found that the rapid curability by moisture and the adhesiveness to aluminum were inferior. In addition, Comparative Example 4 is a composition using a titanium chelate-based catalyst instead of the (B) component of the present invention, and had the following result: with the deactivation of the titanium chelate catalyst due to the influence of N-2-(aminoethyl)-3-aminopropyltrimethoxysilane, the rapid curability and the thick film curing curability by moisture and the adhesiveness to aluminum were inferior to those of Example 1. In addition, Reference Example 1 is a composition using an organic tin catalyst instead of the (B) component of the present invention, and has good rapid curability and thick film curability by moisture and good adhesiveness to aluminum, but is highly toxic and has a problem in terms of harmfulness.

Further, (4) elongation rate of the cured product, (5) tensile strength of the cured product, and (6) hardness of the cured product were evaluated. The test methods used in the Examples and the Comparative Examples in Table 2 are as follows.

### (4) Method for measuring elongation rate of cured product

The thickness of each moisture curable resin composition is set to 2 mm, and the composition is cured in an environment of 23°C and 50% RH for 7 days to manufacture a cured product. The cured product is punched using a No. 3 dumbbell to manufacture a test piece, and marked lines at an interval of 20 mm are drawn on the test piece.

The test piece is fixed to a chuck in the same manner as in the measurement of tensile strength, and pulled at a pull speed of 500 mm/min until the test piece is cut. At the time of measurement, the test piece is stretched to widen the interval between the marked lines, and thus the interval between the marked lines is measured using a vernier caliper until the test piece is cut. The proportion of elongation based on the initial marked line interval is defined as the "elongation rate (%)." Evaluation is carried out based on the following criteria, and results are shown in Table 2. The elongation rate is preferably 3000 or more, and more preferably 350% or more, from the viewpoint of high elongation. "Not measurable" in the table means that the test was unable to be carried out because there was no curing with a thickness of 2 mm even after the lapse of the predetermined curing time.

### (5) Measurement of tensile strength of cured product

The thickness of each moisture curable resin composition is set to 2 mm, and the composition is cured in an environment of 23°C and 50% RH for 7 days to manufacture a cured product. The cured product is punched using a No. 3 dumbbell to manufacture a test piece. Both ends of the test piece are fixed to a chuck such that the long axis of the test piece and the center of the chuck are aligned. The test piece is pulled at a pull speed of 500 mm/min to measure the maximum load. Results are shown in Table 2. The strength at the maximum load is defined as the "tensile strength (MPa)." Details comply with JIS K 6251 (2010). In addition, the tensile strength is preferably 1.5 MPa or more, and more preferably 1.6 MPa or more. "Not measurable" in the table means that the test was unable to be carried out because there was no curing with a thickness of 2 mm even after the lapse of the predetermined curing time.

### (6) Measurement of hardness of cured product

The thickness of each moisture curable resin composition is set to 2 mm, and the composition is cured in an environment of 23°C and 50% RH for 7 days to manufacture a cured product. While keeping the impression surface of a type A durometer (hardness tester) parallel to a test specimen (three sheet-shaped cured products stacked and set to a thickness of 6 mm), the impression surface is pressed with a force of 10 N to bring the impression surface and the sample into close contact. The maximum value is read at the time of measurement, and the maximum value is defined as the "hardness." Details comply with JIS K 6253 (2012). Results are shown in Table 2. In addition, the hardness is preferably A15 or more, and more preferably A20 or more. "Not measurable" in the table means that the test was unable to be carried out because there was no curing with a thickness of 2 mm even after the lapse of the predetermined curing time.

**[Table 2]**

| | (4) Elongation rate of cured product | (5) Tensile strength of cured product | (6) Hardness of cured product |
|---|---|---|---|
| | % | MPa | - |
| Example 1 | 420 | 2.2 | A49 |
| Example 2 | 605 | 2.0 | A35 |
| Example 3 | 390 | 1.7 | A45 |
| Example 4 | 425 | 2.1 | A47 |
| Example 5 | 500 | 2.3 | A46 |
| Comparative Example 1 | 270 | 1.3 | A29 |
| Comparative Example 2 | Not measurable | Not measurable | Not measurable |
| Comparative Example 3 | 210 | 0.4 | A10 |
| Comparative Example 4 | 415 | 1.0 | A20 |
| Comparative Example 5 | 630 | 1.8 | A29 |
| Reference Example 1 | A30 | 2.0 | 450 |

From the results of Examples 1 to 5 in Table 2, it was confirmed that the moisture curable resin composition of the present invention is excellent in elongation rate, tensile strength, and hardness of the cured product.

### Industrial applicability

The moisture curable resin composition of the present invention has excellent adhesiveness to aluminum while having excellent rapid curability and thick film curability by moisture without using an organic tin catalyst, and thus is suitably used in various uses such as an adhesive, a sealing agent, a sealant agent, a potting agent, a coating agent, a thermally conductive resin, a flame retardant resin, and an electrically conductive paste. Therefore, the moisture curable resin composition of the present invention is industrially useful because it can be applied to a wide range of fields.

The present application is based on Japanese Patent Application No. 2020-161322 filed on September 25, 2020, the disclosure of which is incorporated herein by reference in its entirety.

## Claims

1. A moisture curable resin composition comprising the following (A) to (C),
wherein a (B) component is comprised in an amount of 0.5 to 25 parts by mass per 100 parts by mass of the (A) component:
(A) component: a polyoxyalkylene having a hydrolyzable silyl group at both terminals
(B) component: a zinc-based catalyst
(C) component: a compound having one hydrolyzable silyl group and at least one amino group in one molecule.

2. The moisture curable resin composition according to claim 1, wherein the hydrolyzable silyl group of the (A) component is a trimethoxysilyl group or a triethoxysilyl group.

3. The moisture curable resin composition according to claim 1 or 2, wherein the (C) component is a compound having one hydrolyzable silyl group and at least two amino groups in one molecule.

4. The moisture curable resin composition according to any one of claims 1 to 3, wherein the moisture curable resin composition further comprises a filler as a (D) component.

5. The moisture curable resin composition according to any one of claims 1 to 4, wherein the moisture curable resin composition comprises at least one of a compound having at least one group selected from a phenyl group, a vinyl group, and an alkyl group, and one hydrolyzable silyl group, and a tetraalkoxysilane compound, as an (E) component.

6. The moisture curable resin composition according to any one of claims 1 to 5, wherein the moisture curable resin composition further comprises a plasticizer as an (F) component.

7. The moisture curable resin composition according to any one of claims 1 to 6, wherein the zinc-based catalyst of the (B) component is a complex compound having zinc as a central metal.

8. The moisture curable resin composition according to any one of claims 1 to 7, wherein the moisture curable resin composition is used as a sealing agent or an adhesive.

9. The moisture curable resin composition according to any one of claims 1 to 7, wherein the moisture curable resin composition is used as a sealing agent or an adhesive for an aluminum material.

10. A cured product of the moisture curable resin composition according to any one of claims 1 to 7.
